# EUROPEAN PATENT APPLICATION

(11) **EP 4 250 810 A1**
(43) Date of publication of application: **27.09.2023**
(21) Application number: 22164051.9
(22) Date of filing: 24.03.2022
(51) Int. Cl.: H04W 28/02

(54) **WIRELESS COMMUNICATION SYSTEMS**

(71) Applicant: INTEL Corporation, Santa Clara, CA 95054 (US)
(72) Inventor: AGARWAL, Anshu, 560037 Bangalore KA (IN); HEGDE, Mythili, 560078 Bangalore, Karnataka (IN); V, Premnath Babu, Santa Clara, CA, 95054 (US); MAHATO, Pankaj, Santa Clara, CA, 95054 (US); GUPTA, Jay Vishnu, Bengaluru (IN); HS, Harshitha, 560103 Bengaluru, Karnataka (IN)
(74) Representative: Viering, Jentschura & Partner mbB Patent- und Rechtsanwälte

(57) **Abstract**

A wireless station may include one or more processors. The one or more processors may determine data is to be transferred. The one or more processors may also determine a data type of the data corresponds to a priority data type. In addition, the one or more processors may provide a data type signal indicating the data type corresponds to the priority data type. Further, the one or more processors may receive a data type confirmation signal in response to the data type signal. The one or more processors may create a dedicated bearer with a network device based on the data type confirmation signal. The one or more processors may also instruct the data to be transferred via the dedicated bearer.

## Description

### FIELD

The aspects discussed in the present disclosure are related to wireless communication systems.

### BACKGROUND

Unless otherwise indicated in the present disclosure, the materials described in the present disclosure are not prior art to the claims in the present application and are not admitted to be prior art by inclusion in this section.

A wireless station (e.g., user equipment) and a base station may form a cellular network. The cellular network may couple the wireless station to the Internet. The cellular network may permit transfer of data between the wireless station and the Internet via a bearer, a quality of service (QoS) flow, or some combination thereof.

A cellular network may permit a wireless station (e.g., a user equipment(UE)) to make calls, transmit data, and receive data. The cellular network may permit the wireless station to make an emergency call despite the cellular network corresponding to a different service provider than the wireless station.

The subject matter claimed in the present disclosure is not limited to aspects that solve any disadvantages or that operate only in environments such as those described above. Rather, this background is only provided to illustrate one example technology area where some aspects described in the present disclosure may be practiced.

### BRIEF DESCRIPTION OF THE DRAWINGS

Example aspects will be described and explained with additional specificity and detail through the use of the accompanying drawings in which:
FIG. 1 illustrates a block diagram of an exemplary operational environment for a wireless station;
FIG. 2 illustrates a block diagram of another exemplary operational environment for the wireless station;
FIG. 3 illustrates a block diagram of yet another exemplary operational environment for the wireless station;
FIG. 4 illustrates a graphical representation of exemplary network slices;
FIG. 5 illustrates a block diagram of an exemplary operational environment for a wireless station;
FIG. 6 illustrates a block diagram of another exemplary operational environment for the wireless station; and
FIG. 7 illustrates an exemplary message sequence chart for the wireless station to access emergency services via a network,
all according to at least one aspect described in the present disclosure.

### DETAILED DESCRIPTION

A wireless station (e.g., user equipment) and a base station may form a cellular network. The cellular network may couple the wireless station to the Internet. The cellular network may permit transfer of data between the wireless station and the Internet via a bearer, a QoS flow, or some combination thereof. The bearer and the QoS flow may define how data transmitted by the wireless station is treated by the cellular network. In addition, the bearer and the QoS flow may indicate a set of network parameters corresponding to data types.

The wireless station may include an application, an Internet browser, or any other appropriate user interface for receiving data from a user. The wireless station may transmit data to and receive data from the Internet via the cellular network in response to the received data. The data may be transmitted and received using the bearer, the QoS flow, or some combination thereof.

The bearer may include a default bearer, a dedicated bearer, or some combination thereof. The default bearer may permit the data to be transferred based on a best effort setting with equally shared bandwidth. The dedicated bearer may permit the data to be transferred using a guaranteed bit rate (GBR). The dedicated bearer may be implemented on top of existing network slices for a fifth-generation (5G) cellular network, a fourth-generation (4G) cellular network, or any other appropriate cellular network. The dedicated bearer may implement a traffic flow template (TFT) to achieve the GBR. The QoS flow may include a QoS flow and a default QoS flow. The default QoS flow may permit the data to be transferred based on a best effort setting with equally shared bandwidth. The QoS flow may permit the data to be transferred using a GBR.

The data may include a priority data type, a non-priority data type, or some combination thereof. The priority data type may include data corresponding to a payment, a money transfer, a retail sale, a point of sale, a transaction, a bank card use, or some combination thereof. The non-priority data type may include data not corresponding to payments or other financial transactions.

Some data transmission technologies may equally share the bandwidth of the bearer regardless of the data type of the data. Sharing the bearer without consideration of priority of the data may cause the priority data to not be properly transmitted. The reason for the improper transmission may include a packet loss, network congestion, or any other appropriate type of network issue.

Some data transmission technologies may implement ultra-reliability and low latency communication (uRLLC) communication protocols for the priority data. These data transmission technologies may also transmit the non-priority data using the uRLLC protocols.

Some aspects described in the present disclosure may implement the dedicated bearer for the priority data. In addition, some aspects described in the present disclosure may implement uRLLC in combination with the dedicated bearer for the priority data to achieve the GBR.

The wireless station may determine data is to be transferred. The wireless station may also determine a data type of the data corresponds to the priority data type. In addition, the wireless station may provide a data type signal indicating the data type corresponds to the priority data type. Further, the wireless station may receive a data type confirmation signal in response to the data type signal. The wireless station may create the dedicated bearer with a network device based on the data type confirmation signal. The wireless station may also instruct the data to be transferred via the dedicated bearer.

The wireless station may determine data is to be transferred. The wireless station may also determine the data type of the data corresponds to the priority data type. In addition, the wireless station may provide the data type signal indicating the data type corresponds to the priority data type. Further, the wireless station may receive the data type confirmation signal in response to the data type signal. The wireless station may create a QoS flow with the network device based on the data type confirmation signal. The wireless station may also instruct the data to be transferred via the dedicated bearer.

One or more aspects described in the present disclosure may reduce a likelihood of priority data transmissions ending in failure. In addition, one or more aspects described in the present disclosure may provide secure and low latency data transmission in addition to the GBR for transmission of the priority data.

These and other aspects of the present disclosure will be explained with reference to the accompanying figures. It is to be understood that the figures are diagrammatic and schematic representations of such example aspects, and are not limiting, nor are they necessarily drawn to scale. In the figures, features with like numbers indicate like structure and function unless described otherwise.

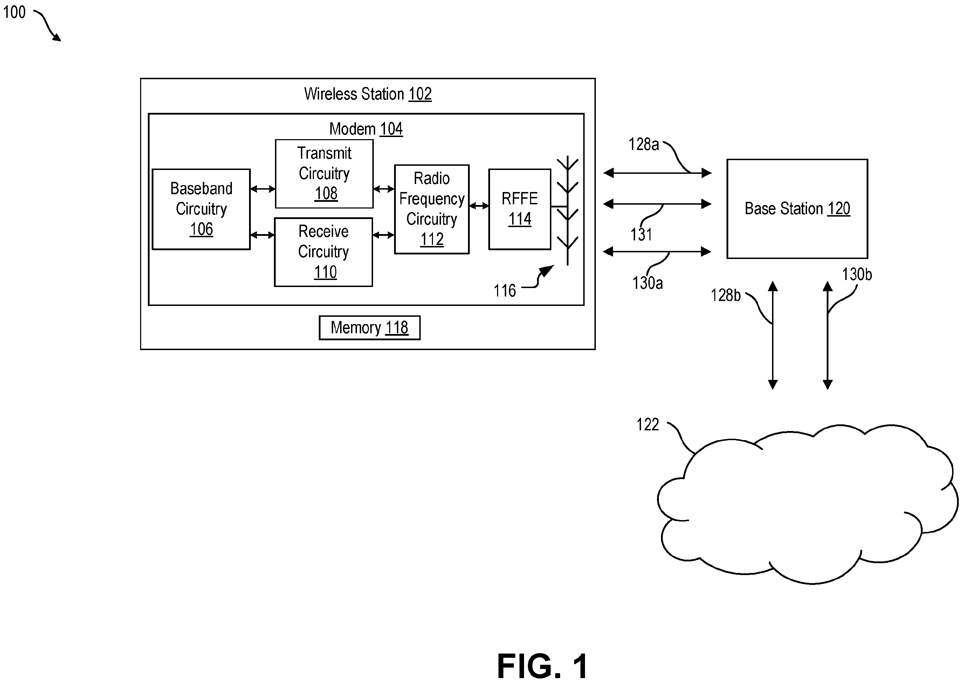

FIG. 1 illustrates a block diagram of an exemplary operational environment 100 for a wireless station 102, in accordance with at least one aspect described in the present disclosure. The operational environment 100 may include the wireless station 102 and a base station 120. The base station 120 may permit the wireless station 102 to communicatively couple to a network 122. The network 122 may include the Internet. The wireless station 102 may be communicatively coupled to the base station 102 via a first connection 128a, a second connection 130a, and a data type interface 131. The base station 120 may be communicatively coupled to the network 122 via a third connection 128b and a fourth connection 130b.

The wireless station 102 may include a modem 104 and a memory 118. The modem 104 may include baseband circuitry 106 that may implement one or more-layer operations. The modem 104 may further include transmit circuitry 108, receive circuitry 110, radio frequency (RF) circuitry 112, and RF front end (RFFE) 114, which may include or connect to one or more antenna panels 116. The transmit circuitry 108 may include a digital-to-analog converter, mixer, intermediate frequency (IF) components, etc.; the receive circuitry 110 may include an analog-to-digital converter, mixer, IF components, etc.; the RF circuitry 112 may include a low-noise amplifier, a power amplifier, power tracking components, etc.; the RFFE 114 may include filters (for example, surface/bulk acoustic wave filters), switches, antenna tuners, beamforming components (for example, phase-array antenna components), etc. The transmit circuitry 108, the receive circuitry 110, the RF circuitry 112, the RFFE 114, and the antenna panels 116 may be referred to generically in the present disclosure as transmit/receive components. The transmit/receive components may be arranged in multiple parallel transmit/receive chains, may be disposed in the same or different chips/modules, etc.

The wireless station 102 may establish data reception and data transmission via the antenna panels 116, the RFFE 114, the RF circuitry 112, the receive circuitry 110, and the baseband circuitry 106. The antenna panels 116 may receive a transmission from the base station 120 via receive-beamforming signals received by a plurality of antennas/antenna elements of the one or more antenna panels 116. The transmit components of the wireless station 102 may apply a spatial filter to the data to be transmitted to form a transmit beam emitted by the antenna elements of the antenna panels 116.

The wireless station 102 may include, or may be implemented, partially or entirely, by circuitry and/or logic. For example, the modem 104, the memory 118, or some combination thereof may be implemented, partially or entirely, by circuitry and/or logic. Additionally or alternatively, one or more functionalities of the wireless station 102 may be implemented by logic, which may be executed by a machine and/or one or more processors. The memory 118 may be configured to store at least some of the information processed by the wireless station 102. Examples of the wireless station 1104 may include, but are not limited to, a smartphone, a laptop computer, a computing device, a tablet computer, a mobile phone, a personal digital assistant (PDA), an e-reader device, a desktop computer, a wearable computing device, or any other appropriate device.

An example will now be described in which the wireless station 102 is configured to operate within a 4G cellular network. The first connection 128a and the third connection 128b may form a dedicated bearer between the wireless station 102 and the network 122. In addition, the second connection 130a and the fourth connection 130b may form a default bearer between the wireless station 102 and the network 122. The dedicated bearer 128a-b may permit transfer of data corresponding to the priority data type. The default bearer 130a-b may permit transfer of data not corresponding to the priority data type.

The dedicated bearer 128a-b may ensure a bit rate of transferring the data that is equal to or greater than a bit rate of transferring data via the default bearer 130a-b. The dedicated bearer may ensure the GBR of transferring the data that is equal to or greater than a non-GBR of transferring data via the default bearer 130a-b. The dedicated bearer 128a-b may be activated to establish an evolved packet switched system (EPS) bearer context with a specific QoS and TFT between the wireless station 102 and the base station 120.

The wireless station 102 may determine data is to be transferred to the network 122. The wireless station 102 may determine a data type of the data corresponds to a priority data type. The priority data type may include a payment data type, a bank data type, a bank transfer data type, a bank card data type, or some combination thereof.

The wireless station 102 may provide a data type signal indicating the data type corresponds to the priority data type. The wireless station 102 may provide the data type signal to the base station 120 (e.g., a network device) via the data type interface 131. The data type interface 131 may be outside the dedicated bearer 128a-b and the default bearer 130a-b. The wireless station 102 may receive a data type confirmation signal in response to the data type signal.

The wireless station 102 may create the dedicated bearer 128a-b with the base station 120 based on the data type confirmation signal. The wireless station 102 may also instruct the data to be transferred via the dedicated bearer 128a-b.

An example will now be described in which the wireless station 102 is configured to operate within a 5G cellular network. The first connection 128a and the third connection 128b may form a QoS flow between the wireless station 102 and the network 122. In addition, the second connection 130a and the fourth connection 130b may form a default QoS flow between the wireless station 102 and the network 122.

The QoS flow 128a-b may ensure a bit rate of transferring the data that is equal to or greater than a bit rate of transferring data via the default QoS flow 130a-b. The QoS flow 128a-b may be implemented in a network slice that is different than a network slice of the default QoS flow 130a-b. The QoS flow 128a-b may be realized by implementing a 5G QoS identifier (5QI) in a uRLLC network slice that is different than a network slice without the 5QI. The default QoS 130a-b may transfer data not corresponding to the priority data type. The QoS flow 128a-b may permit transfer of data corresponding to the priority data type.

The wireless station 102 may determine data is to be transferred to the network 122. The wireless station 102 may also determine the data type of the data corresponds to the priority data type. The wireless station 102 may provide the data type signal indicating the data type corresponds to the priority data type. The wireless station 102 may provide the data type signal via the data type interface 131.

The wireless station 102 may receive the data type confirmation signal in response to the data type signal. The wireless station 102 may receive the data type confirmation signal from the base station 120. The wireless station 102 may create the QoS flow 128a-b with the base station 120 based on the data type confirmation signal. The wireless station 102 may instruct the data to be transferred via the QoS flow 128a-b.

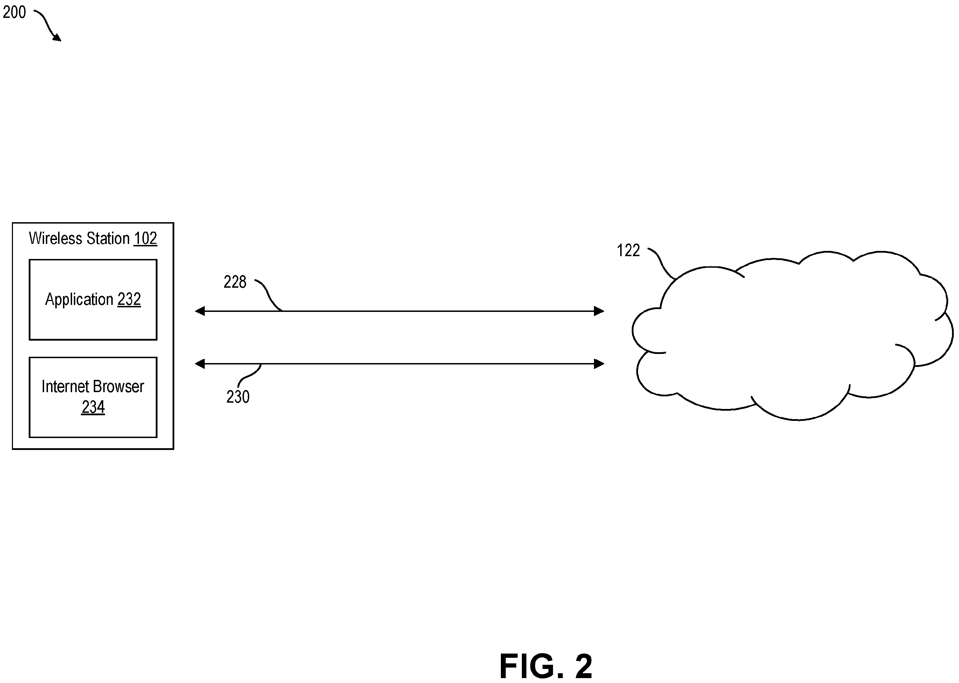

FIG. 2 illustrates a block diagram of another exemplary operational environment 200 for the wireless station 102, in accordance with at least one aspect described in the present disclosure. The operational environment 200 may include the wireless station 102 and the network 122. The wireless station 102 is illustrated in FIG. 2 without the modem 104 and the memory 118 for ease of illustration. The wireless station 102 may be configured to operate within a 4G cellular network.

The wireless station 102 may transfer the priority data to and receive the priority data from the network 122 via a dedicated bearer 228. The dedicated bearer 228 may correspond to the first connection 128a and the third connection 128b of FIG. 1. The wireless station 102 may transfer the non-priority data to and receive the non-priority data from the network 122 via the default bearer 230. The default bearer 230 may correspond to the second connection 130a and the fourth connection 130b of FIG. 1.

The wireless station 102 may include an application 232 and an Internet browser 234. The application 232 and the Internet browser 234 may include user interfaces to receive user input to determine which data is to be transferred. For example, the wireless station 102 may determine the data is to be transferred by receiving a data transfer request from the application 232. As another example, the wireless station 102 may determine the data is to be transferred by receiving the data transfer request from the Internet browser. The wireless station 102 may identify the data type of the data in response to receiving the data transfer request.

The wireless station 102 may determine the data type of the data corresponds to the priority data type. The wireless station 102 may provide the data type signal indicating the data type corresponds to the priority data type as discussed above in relation to FIG. 1. The wireless station 102 may also receive the data type confirmation signal in response to the data type signal as discussed above in relation to FIG. 1.

The wireless station 102 may create the dedicated bearer 228 with the network 122 based on the data type confirmation signal. The wireless station 102 may instruct the data to be transferred via the dedicated bearer 228.

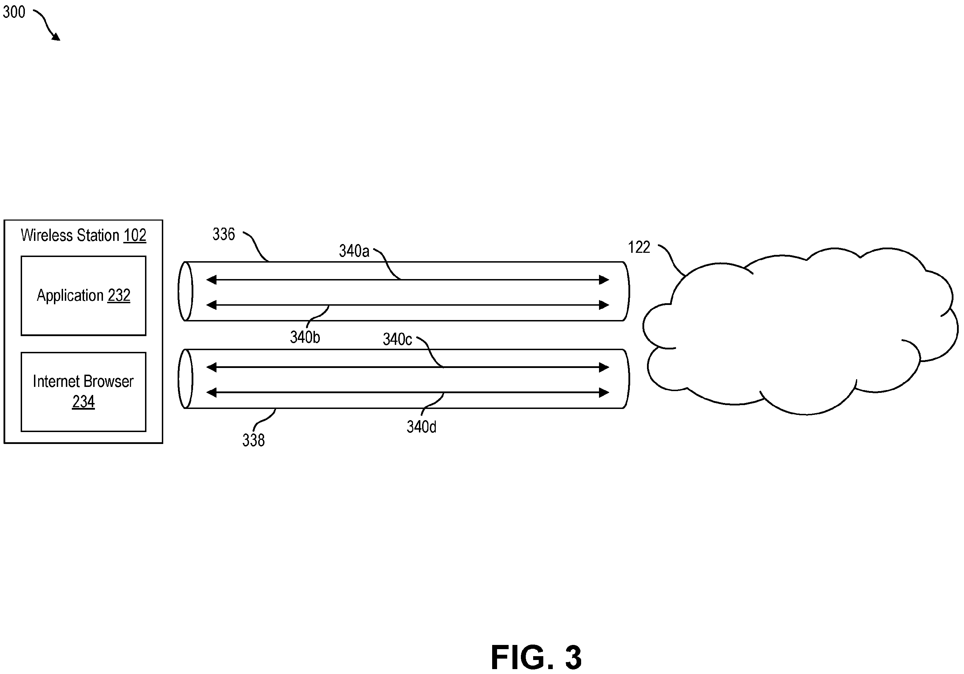

FIG. 3 illustrates a block diagram of yet another exemplary operational environment 300 for the wireless station 102, in accordance with at least one aspect described in the present disclosure. The operational environment 300 may include the wireless station 102 and the network 122. The wireless station 102 is illustrated in FIG. 3 without the modem 104 and the memory 118 for ease of illustration. The wireless station 102 may be configured to operate within a 5G cellular network.

The wireless station 102 may transfer data to and receive data from the network 122 via a first network slice 336, a second network slice 338, or some combination thereof. The wireless station 102 may transfer the priority data to and receive the priority data from the network 122 via the first network slice 336. The first network slice 336 may correspond to the first connection 128a and the third connection 128b of FIG. 1. The wireless station 102 may transfer the non-priority data to and receive the non-priority data from the network 122 via the second network slice 338. The second network slice 338 may correspond to the second connection 130a and the fourth connection 130b of FIG. 1. The first network slice 336 may include a first QoS flow 340a and a second QoS flow 340b, which may correspond to the QoS flow for the priority data. The second network slice 338 may include a third QoS flow 340c and a fourth QoS flow, which may correspond to the default QoS flow for the non-priority data.

The wireless station 102 may include the application 232 and the Internet browser 234. The application 232 and the Internet browser 234 may include user interfaces to receive user input to determine which data is to be transferred. For example, the wireless station 102 may determine the data is to be transferred by receiving the data transfer request from the application 232. As another example, the wireless station 102 may determine the data is to be transferred by receiving the data transfer request from the Internet browser. The wireless station 102 may identify the data type of the data in response to receiving the data transfer request.

The wireless station 102 may determine the data type of the data corresponds to the priority data type. The wireless station 102 may provide the data type signal indicating the data type corresponds to the priority data type as discussed above in relation to FIG. 1. The wireless station 102 may also receive the data type confirmation signal in response to the data type signal as discussed above in relation to FIG. 1.

The wireless station 102 may create the first QoS flow 340a, the second QoS flow 340b, or some combination thereof within the first network slice 336 based on the data type confirmation signal. The wireless station 102 may instruct the data to be transferred via the first QoS flow 340a, the second QoS flow 340b, or some combination.

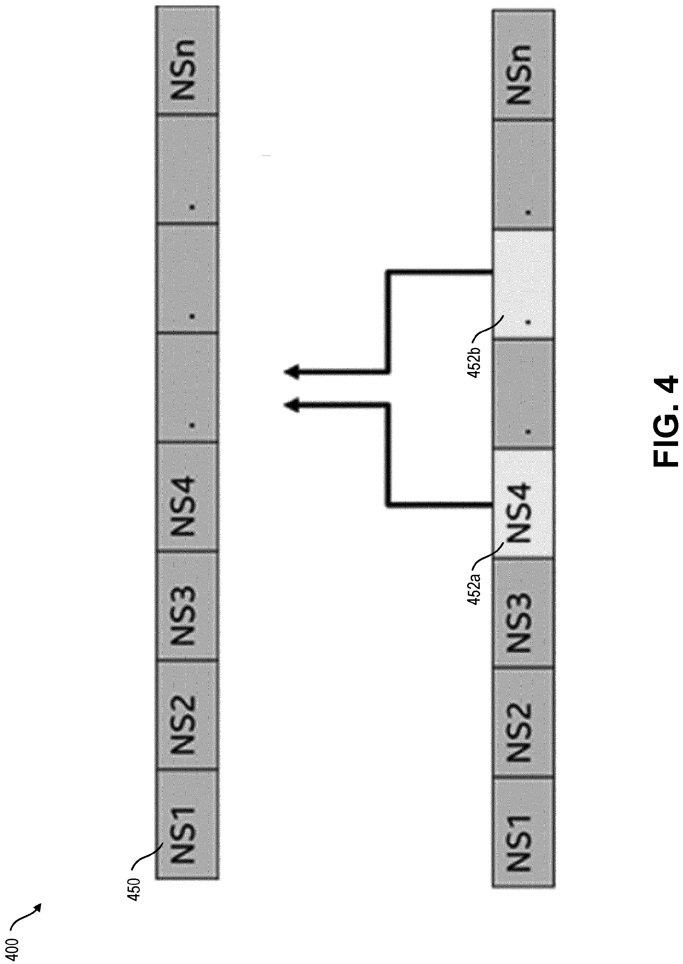

FIG. 4 illustrates a graphical representation 400 of exemplary network slices, in accordance with at least one aspect described in the present disclosure. The network slices may include a default network slice 450. A single instance of the default network slice 450 is numbered in FIG. 4 for ease of illustration. The network slices may also include a first dedicated network slice 452a and a second dedicated network slice 452b. The priority data may be transmitted and/or received via the first dedicated network slice 452a, the second dedicated network slice 452b, or some combination thereof.

A wireless station (e.g., user equipment) and a base station may form a cellular network. The cellular network may couple the wireless station to the Internet. The cellular network may permit a transfer of data between the wireless station and the Internet via a bearer, a QoS flow, or some combination thereof. The bearer and the QoS flow may define how data transmitted by the wireless station is treated by the cellular network. In addition, the bearer and the QoS flow may indicate a set of network parameters corresponding to data types.

The wireless station may include an application, an Internet browser, or any other appropriate user interface for receiving data from a user. The wireless station may transmit data to and receive data from the Internet via the cellular network in response to the received data. The data may be transmitted and received using the bearer, the QoS flow, or some combination thereof.

The bearer may include a default bearer, a dedicated bearer, or some combination thereof. The dedicated bearer may permit the data to be transferred using a GBR. The dedicated bearer may be implemented on top of existing network slices for a 5G cellular network, a 4G cellular network, or any other appropriate cellular network. The dedicated bearer may implement a TFT to achieve the GBR. The QoS flow may include a QoS flow and a default QoS flow. The QoS flow may permit the data to be transferred using a GBR.

The data may include a priority data type, a non-priority data type, or some combination thereof. The priority data type may include data corresponding to a payment, a money transfer, a retail sale, a point of sale, a transaction, a bank card use, or some combination thereof. The non-priority data type may include data not corresponding to payments or other financial transactions.

The network may expose an interface to the application, the Internet browser, or other user interface to declare the data type (e.g., a payment/money transfer) and to request resources. If a request is received and the type of data is a priority data type, the dedicated bearer may be created, and the priority data may be transmitted via the dedicated bearer. The wireless station may identify the data as corresponding to the priority data type based on the application (e.g., data source), a time of network connection, or some combination thereof. Additionally or alternatively, the wireless station may identify the data as corresponding to the priority data type based an identification performed by the application.

The wireless station may utilize both, a uRLLC network and the dedicated bearer concept to improve a payment experience. The wireless station may establish the QoS using the dedicated bearer with a QCI for payment application. The wireless station may also enforce the QoS at an EPS bearer level. The wireless station may establish the dedicated bearer including a particular QCI value enforcing the GBR.

The wireless station may include one or more processors. The wireless station may be configured to operate within a 4G cellular network. The wireless station may provide a connection framework guideline for transferring priority data over an existing 4G infrastructure.

The wireless station may determine data is to be transferred. The wireless station may determine the data is to be transferred by receiving a data transfer request from an application within the wireless station. Additionally or alternatively, the wireless station may determine the data is to be transferred by receiving a data transfer request from an Internet browser within the wireless station. The wireless station may identify the data type of the data in response to receiving the data transfer request.

The wireless station may determine the data is to be transferred by receiving a data transfer request. The wireless station may also determine the data type of the data corresponds to the priority data type by determining a source type of the data transfer request corresponds to a priority source.

The wireless station may determine a data type of the data corresponds to a priority data type. The priority data type may include a payment data type, a bank data type, a bank transfer data type, a bank card data type, or some combination thereof.

The wireless station may provide a data type signal indicating the data type corresponds to the priority data type. The wireless station may provide the data type signal to the network device via a data type interface outside the dedicated bearer and a default bearer.

The wireless station may receive a data type confirmation signal in response to the data type signal. The wireless station may also create the dedicated bearer with the network device based on the data type confirmation signal. The dedicated bearer may ensure a bit rate of transferring the data that is equal to or greater than a bit rate of transferring data via a default bearer. The dedicated bearer may ensure the GBR of transferring the data that is equal to or greater than a non-GBR of transferring data via a default bearer. The dedicated bearer may be activated to establish an EPS bearer context with a specific QoS and TFT between the wireless station and the base station. The default bearer may be configured to permit transfer of data not corresponding to the priority data type. The dedicated bearer may include a pre-defined QCI corresponding to the priority data type and a GBR parameter corresponding to the dedicated bearer.

The wireless station may instruct the data to be transferred via the dedicated bearer. The QoS of the data transfer may be enforced at an EPS bearer level.

In a 5G cellular network, each network slice subscriber may include one or more QoS flow. A uRLLC slice may include multiple QoS flows. A QoS flow corresponding to a particular 5QI on top of the uRLLC may be implemented for payment data types. In 5G, the wireless station may enforce the QoS at a QoS flow level.

The wireless station may include one or more processors. The wireless station may be configured to operate within a 5G cellular network. The wireless station may provide a connection framework guideline for transferring priority data over an existing 5G infrastructure.

The wireless station may determine data is to be transferred. The wireless station may determine the data is to be transferred by receiving the data transfer request from the application within the wireless station. Additionally or alternatively, the wireless station may determine the data is to be transferred by receiving the data transfer request from the Internet browser within the wireless station. Further, the wireless station may identify the data type of the data in response to receiving the data transfer request.

The wireless station may determine the data is to be transferred by receiving the data transfer request. In addition, the wireless station may determine the data type of the data corresponds to the priority data type by determining the source type of the data transfer request corresponds to a priority source.

The wireless station may determine the data type of the data corresponds to the priority data type. The priority data type may include a payment data type, a bank data type, a bank transfer data type, a bank card data type, or some combination thereof.

The wireless station may provide the data type signal indicating the data type corresponds to the priority data type. The wireless station may provide the data type signal to the network device via the data type interface outside the QoS flow and the default QoS flow. The wireless station may receive the data type confirmation signal in response to the data type signal.

The wireless station may create a QoS flow with the network device based on the data type confirmation signal. The QoS flow may ensure a bit rate of transferring the data that is equal to or greater than a bit rate of transferring data via a default QoS flow. The QoS flow may include a 5QI in uRLLC network slice that is different than a network slice without a 5QI.

The QoS flow may be implemented in a network slice that is different than a network slice of a default QoS flow. The default QoS flow may be configured to permit transfer of data not corresponding to the priority data type. The QoS flow may include a pre-defined 5QI corresponding to the priority data type. The wireless station may instruct the data to be transferred via the QoS flow. The wireless station may enforce the QoS of the data transfer at a QoS flow level.

A cellular network may permit a wireless station (e.g., a UE) to make calls, transmit data, and receive data. The cellular network may permit the wireless station to make an emergency call (e.g., a call to 911 services or a call to other emergency services). The cellular network may permit the wireless station to make the emergency call despite the cellular network corresponding to a different service provider than the wireless station. The cellular network may permit the wireless station to make the emergency call in the absence of or presence of a low-quality connection to a cellular network corresponding to the service provider of the wireless station.

Some cellular technologies may not permit the wireless station to access emergency services (e.g., emergency data services) or the Internet (e.g., emergency data services via the Internet) via a cellular network corresponding to a different service provider than the wireless station. An example situation in which the wireless station may access the emergency services may include a low battery situation. Examples of the emergency services may include an emergency service website/application, a hospital emergency service website/application, a fire station emergency service website/application, an emergency ask me website/application, or some combination thereof. Another example of the emergency services may include a navigation website/application to provide access to navigation information.

Some aspects described in the present disclosure may authenticate the wireless station to access emergency services via the cellular network despite the wireless station corresponding to a different service provider than the cellular network. The wireless station may exit a physical area corresponding to the cellular network and may automatically enter an emergency networking mode. In the emergency networking mode, the wireless station may request authorization from a base station corresponding to the cellular network. When authorized, the wireless station may be able to access emergency categorized network services via the cellular network. The wireless station may operate according to the emergency networking mode until the wireless station re-enters the physical area corresponding to the cellular network.

A wireless station (e.g., the UE) may include one or more processors. The wireless station may determine a cellular signal is not being received from a cellular network corresponding to the wireless station. The wireless station may also enter an emergency networking mode based on the cellular signal not being received. In addition, the wireless station may provide a request signal to a base station. The base station may form part of a network not corresponding to the wireless station. The network may be different than the cellular network and the request signal may request emergency service access. Further, the wireless station may receive a setting signal requesting an operational setting of the wireless station. The wireless station may provide a setting response signal indicating the operational setting. The wireless station may also receive an authorization signal in response to the setting response signal. The authorization signal may indicate the wireless station is authenticated to access an emergency service via the network.

The base station (e.g., another wireless station) corresponding to a network corresponding to a first service provider may include one or more processors. The base station may receive the request signal from the wireless station (e.g., the UE). The request signal may request emergency service access. The request signal may also indicate that the wireless station corresponds to a cellular network corresponding to a second service provider. The second service provider may be different than the first service provider. The base station may also provide the setting signal in response to the request signal. The setting signal may request the operational setting of the wireless station. In addition, the base station may receive the setting response signal indicating the operational setting of the wireless station. Further, the base station may provide an authorization signal in response to the setting response signal. The authorization signal may indicate the wireless station is authenticated to access the emergency service via the network.

Some aspects described in the present disclosure may permit the wireless station to access emergency services via a network corresponding to a different service provider, which may expand a physical area in which the emergency services are accessible.

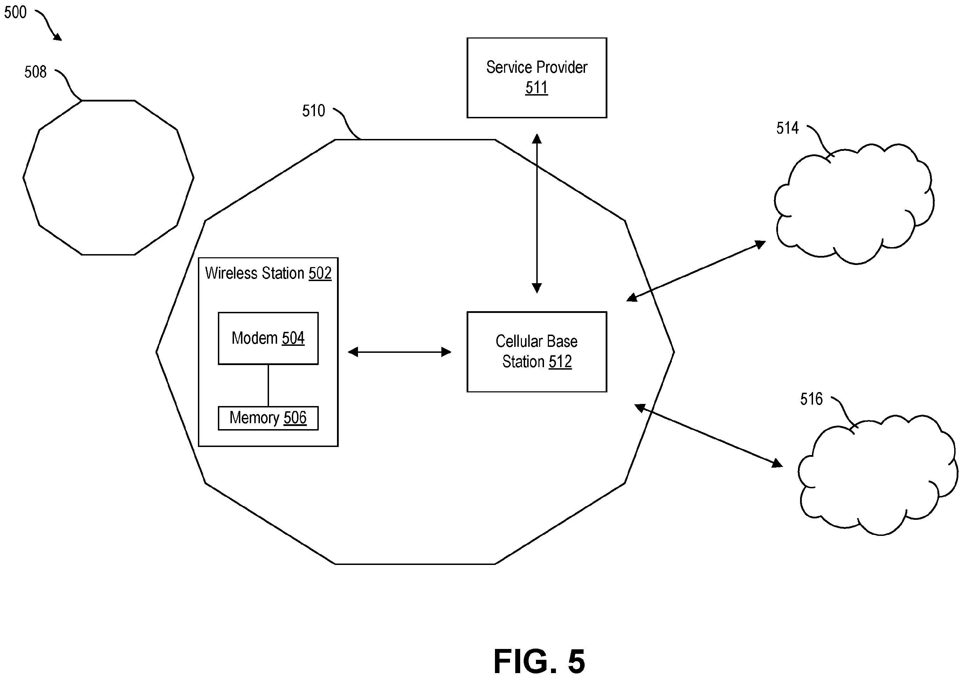

FIG. 5 illustrates a block diagram of an exemplary operational environment 500 for a wireless station 502, in accordance with at least one aspect described in the present disclosure. The operational environment 500 may include a wireless station 502, a cellular base station 512, and a service provider 511. The cellular base station 512 may form part of a second cellular network 510 that corresponds to the service provider 511. The cellular base station 512 may operate as an access point (AP) for the second cellular network 510. The wireless station 502 may correspond to a first cellular network 508 that corresponds to another service provider (not illustrated in FIG. 5).

The wireless station 502 may include a modem 504 and a memory 506. The modem 504 may include baseband circuitry (not illustrated in FIG. 5) that may implement one or more-layer operations. The modem 504 may further include transmit circuitry (not illustrated in FIG. 5), receive circuitry (not illustrated in FIG. 5), radio frequency (RF) circuitry (not illustrated in FIG. 5), and RF front end (RFFE) (not illustrated in FIG. 5), which may include or connect to one or more antenna panels (not illustrated in FIG. 5). The transmit circuitry may include a digital-to-analog converter, mixer, intermediate frequency (IF) components, etc.; the receive circuitry may include an analog-to-digital converter, mixer, IF components, etc.; the RF circuitry may include a low-noise amplifier, a power amplifier, power tracking components, etc.; the RFFE may include filters (for example, surface/bulk acoustic wave filters), switches, antenna tuners, beamforming components (for example, phase-array antenna components), etc. The transmit circuitry, the receive circuitry, the RF circuitry, the RFFE, and the antenna panels may be referred to generically in the present disclosure as transmit/receive components. The transmit/receive components may be arranged in multiple parallel transmit/receive chains, may be disposed in the same or different chips/modules, etc.

The wireless station 502 may establish data reception and data transmission via the antenna panels, the RFFE, the RF circuitry, the receive circuitry, and the baseband circuitry. The antenna panels may receive a transmission via receive-beamforming signals received by a plurality of antennas/antenna elements of the one or more antenna panels. The transmit components of the wireless station 502 may apply a spatial filter to the data to be transmitted to form a transmit beam emitted by the antenna elements of the antenna panels.

The wireless station 502 may include, or may be implemented, partially or entirely, by circuitry and/or logic. For example, the modem 504, the memory 506, or some combination thereof may be implemented, partially or entirely, by circuitry and/or logic. Additionally or alternatively, one or more functionalities of the wireless station 502 may be implemented by logic, which may be executed by a machine and/or one or more processors. The memory 506 may be configured to store at least some of the information processed by the wireless station 502. Examples of the wireless station 502 may include, but are not limited to, a smartphone, a laptop computer, a computing device, a tablet computer, a mobile phone, a personal digital assistant (PDA), an e-reader device, a desktop computer, a wearable computing device, or any other appropriate device.

The cellular base station 512 may include, or may be implemented, partially or entirely, by circuitry and/or logic. Additionally or alternatively, one or more functionalities of the cellular base station 512 may be implemented by logic, which may be executed by a machine and/or one or more processors. The cellular base station 512 may include a memory (not illustrated in FIG. 5) configured to store at least some of the information processed by the cellular base station 512.

The first cellular network 508 may correspond to a physical area of coverage provided by another cellular base station (not illustrated in FIG. 5). The second cellular network 510 may correspond to a physical area of coverage provided by the cellular base station 512. The wireless station 502 is illustrated in FIG. 5 as being physically located outside the physical area of coverage of the first cellular network 508 and physically located within the physical area of coverage of the second cellular network 510. The wireless station 502 may include a mobile device that may enter and exit the physical areas of coverage of the first cellular network 508 and the second cellular network 510.

The wireless station 502 may determine a cellular signal is not being received from the first cellular network 508. The wireless station 502 may also determine it is outside the physical area of coverage corresponding to the first cellular network 508. The wireless station 502 may enter an emergency networking mode based on the cellular signal not being received. The wireless station 502 may determine it is within the physical area of coverage corresponding to the second cellular network 510.

The modem 504 may generate a request signal. The request signal may request emergency service access to the second cellular network 510 for the wireless station 502. In addition, the request signal may indicate that the wireless station 502 corresponds to the first cellular network 508, which corresponds to a service provider that is different than the service provider 511. The wireless station 502 may transmit the request signal to the cellular base station 512.

The cellular base station 512 may receive the request signal from the wireless station 502. The cellular base station 512 may provide a confirmation signal to the service provider 511 that indicates that the wireless station 502 may access the emergency services. The service provider 511 may perform one or more operations based on processing capabilities of the service provider 511. The service provider 511 may authenticate the wireless station 502 to access the emergency services based on the emergency networking mode and the request signal.

The cellular base station 512 may provide a setting signal to the wireless station 502 in response to the request signal. The setting signal may request an operational setting of the wireless station 502. The wireless station 502 may receive the setting signal from the cellular base station 512. The modem 504 may generate a setting response signal. The setting response signal may indicate the operational setting. The wireless station 502 may transmit the setting response signal to the cellular base station 512.

The cellular base station 502 may receive the setting response signal. The cellular base station 512 may provide an authorization signal in response to the setting response signal. The authorization signal may indicate the wireless station 502 is authenticated to access the emergency service via the second cellular network 510. The authorization signal may also indicate a setting to connect the wireless station 502 with the second cellular network 510. For example, the authorization signal may indicate that the wireless station 502 may access the emergency service via an emergency network slice 516 and not via a non-emergency network slice 514. The wireless station 502 may receive the authorization signal in response to the setting response signal.

The cellular base station 512 may provide an allowance signal to the service provider 511. The allowance signal may indicate a slice of the network that the wireless station 502 is authorized to access the emergency service via. For example, the allowance signal may indicate that the wireless station 502 may access the emergency service via the emergency network slice 516 and not via the non-emergency network slice 514.

The wireless station 502 may transmit a data signal within the second cellular network 510 in accordance with the setting. The data signal may represent data to be provided to the emergency service. The data to be provided to the emergency service may include login information to log into an application or a website. The data to be provided to the emergency service may include data provided by a user after or prior to logging into the application.

The wireless station 502 may determine the cellular signal is being received from the first cellular network 508. For example, the wireless station 502 may determine the wireless station 502 is within the physical area of coverage corresponding to the first cellular network 508. The wireless station 502 may exit the emergency networking mode based on the cellular signal being received.

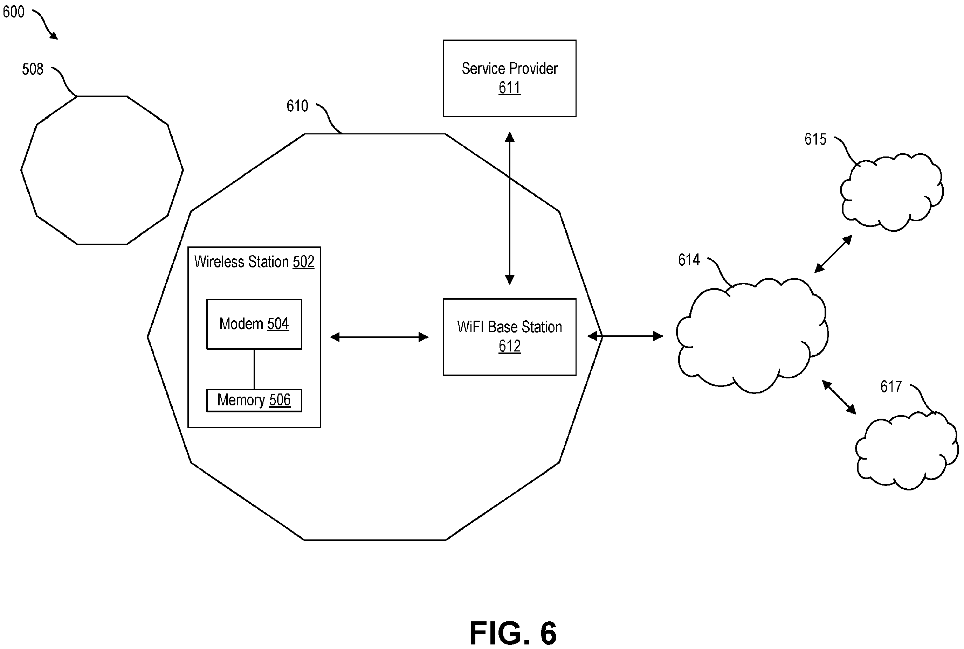

FIG. 6 illustrates a block diagram of another exemplary operational environment 600 for the wireless station 502, in accordance with at least one aspect described in the present disclosure. The operational environment 600 may include the wireless station 502, a WiFi base station 612, and a service provider 611. The WiFi base station 612 may form part of a WiFi network 610 that corresponds to the service provider 611. The WiFi base station 612 may operate as an AP for the WiFi network 610.

The WiFi base station 612 may include, or may be implemented, partially or entirely, by circuitry and/or logic. Additionally or alternatively, one or more functionalities of the WiFi base station 612 may be implemented by logic, which may be executed by a machine and/or one or more processors. The WiFi base station 612 may include a memory (not illustrated in FIG. 6) configured to store at least some of the information processed by the WiFi base station 612.

The WiFi network 610 may correspond to a physical area of coverage provided by the WiFi base station 612. The wireless station 502 is illustrated in FIG. 6 as being physically located outside the physical area of coverage of the first cellular network 508 and physically located within the physical area of coverage of the WiFi network 610. The wireless station 502 may include a mobile device that may enter and exit the physical areas of coverage of the first cellular network 508 and the WiFi network 610.

The wireless station 502 may determine a cellular signal is not being received from the first cellular network 508. The wireless station 502 may also determine it is outside the physical area of coverage corresponding to the first cellular network 508. The wireless station 502 may enter the emergency networking mode based on the cellular signal not being received. The wireless station 502 may determine it is within the physical area of coverage corresponding to the WiFi network 610.

The modem 504 may generate the request signal. The request signal may request emergency service access to the WiFi network 610 for the wireless station 502. In addition, the request signal may indicate that the wireless station 502 corresponds to the first cellular network 508, which corresponds to a service provider that is different than the service provider 611. The wireless station 502 may transmit the request signal to the WiFi base station 612.

The WiFi base station 612 may receive the request signal from the wireless station 502. The WiFi base station 612 may provide the confirmation signal to the service provider 611 that indicates that the wireless station 502 may access the emergency services. The service provider 611 may perform one or more operations based on processing capabilities of the service provider 611. The service provider 611 may authenticate the wireless station 502 to access the emergency services based on the emergency networking mode and the request signal.

The WiFi base station 612 may provide the setting signal to the wireless station 502 in response to the request signal. The setting signal may request the operational setting of the wireless station 502. The wireless station 502 may receive the setting signal from the WiFi base station 612. The modem 504 may generate the setting response signal. The setting response signal may indicate the operational setting. The wireless station 502 may transmit the setting response signal to the WiFi base station 612.

The WiFi base station 612 may receive the setting response signal. The WiFi base station 612 may provide the authorization signal in response to the setting response signal. The authorization signal may indicate the wireless station 502 is authenticated to access the emergency service via the WiFi network 610. The authorization signal may also indicate the setting to connect the wireless station 502 with the WiFi network 610. For example, the authorization signal may indicate that the wireless station 502 may access an emergency service portion 615 of a network 614 (e.g., the Internet) and not a non-emergency service portion 617. The wireless station 502 may receive the authorization signal in response to the setting response signal.

The wireless station 502 may transmit a data signal within the WiFi network 610 in accordance with the setting. The data signal may represent data to be provided to the emergency service portion 615. The data to be provided to the emergency service portion 615 may include login information to log into the application or the website. The data to be provided to the emergency service portion 615 may include data provided by a user after or prior to logging into the application.

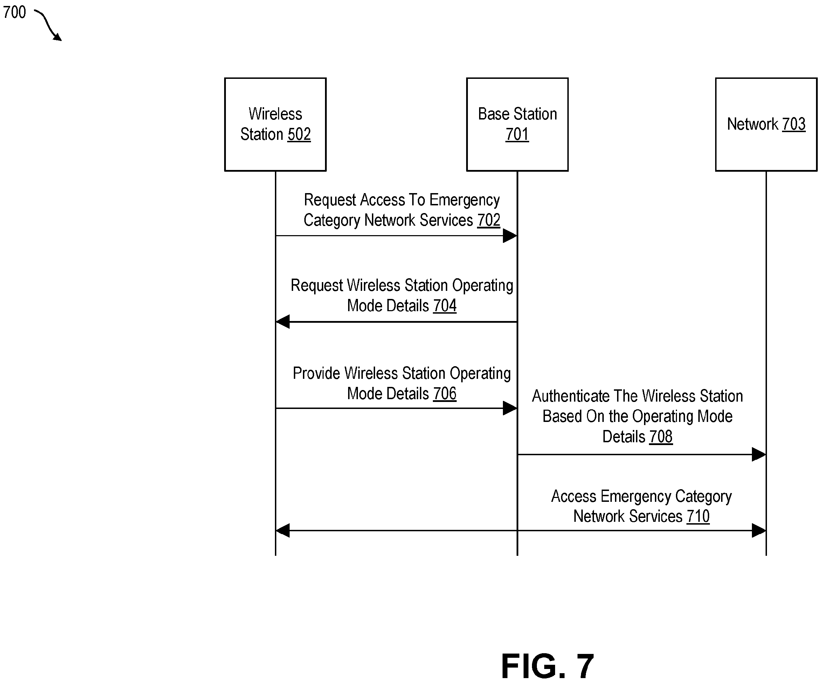

FIG. 7 illustrates an exemplary message sequence chart 700 for the wireless station 502 to access emergency services via a network 703, in accordance with at least one aspect described in the present disclosure.

The messages of the message sequence chart 700 may be transmitted and received by any suitable system, apparatus, or device with respect to the wireless station 502 accessing emergency services via the network 703. For example, the wireless station 502, a base station 701, and the network 703 may transmit and receive the messages of the message sequence chart 700. The base station 701 may correspond to the cellular base station 512 of FIG. 5 or the WiFi base station 612 of FIG. 6. The network 703 may correspond to the second cellular network 510 of FIG. 5 or the WiFi network 610 of FIG. 6.

The wireless station 502 may request access to emergency category network services 702. The wireless station 502 may provide the request signal to the base station 701. The base station 701 may request wireless station operating mode details 704. The base station 701 may provide the setting signal to the wireless station 706. The wireless station 502 may provide the wireless station operating mode details. The wireless station 502 may provide the setting response signal to the base station 701.

The base station 701 may authenticate the wireless station based on the operating mode details 708. The wireless station 502, the base station 701 and the network 703 may access or provide access to the emergency category network services 710.

A cellular network may permit a wireless station (e.g., a UE) to make calls, transmit data, and receive data. The cellular network may permit the wireless station to make an emergency call (e.g., a call to 911 services or a call to other emergency services). The cellular network may permit the wireless station to make the emergency call despite the cellular network corresponding to a different service provider than the wireless station. The cellular network may permit the wireless station to make the emergency call in the absence of or presence of a low-quality connection to a cellular network corresponding to the service provider of the wireless station.

Some cellular technologies may not permit the wireless station to access emergency services (e.g., emergency data services) or the Internet (e.g., emergency data services via the Internet) via a cellular network corresponding to a different service provider than the wireless station. An example situation in which the wireless station may access the emergency services may include a low battery situation. Examples of the emergency services may include an emergency service website/application, a hospital emergency service website/application, a fire station emergency service website/application, an emergency ask me website/application, or some combination thereof. Another example of the emergency services may include a navigation website/application to provide access to navigation information.

Some aspects described in the present disclosure may authenticate the wireless station to access emergency services via the cellular network despite the wireless station corresponding to a different service provider than the cellular network. The wireless station may exit a physical area corresponding to the cellular network and may automatically enter an emergency networking mode. In the emergency networking mode, the wireless station may request authorization from a base station corresponding to the cellular network. When authorized, the wireless station may be able to access emergency categorized network services via the cellular network. The wireless station may operate according to the emergency networking mode until the wireless station re-enters the physical area corresponding to the cellular network.

When the wireless station (e.g., the UE) is physically located outside a physical area of coverage of a corresponding cellular network, the wireless station may enter an emergency networking mode. The wireless station may operate according to the emergency networking mode until the wireless station is physically located within the physical area of coverage of the corresponding cellular network.

The wireless station may enter the emergency networking mode based on a no cellular signal being received. The wireless station may automatically enter the emergency network mode when receiving the no cellular signal.

In the emergency networking mode, the wireless station may attempt to access emergency services through apps or any other appropriate mean by transmitting data with a different network. The base station of the different network may identify the request to access the emergency services and may authenticate the wireless station. The base station may request operating mode details from the wireless station. The wireless station may provide the operating mode details and may identify the emergency service to be accessed. The base station may authenticate the wireless station based on this information.

The base station may permit the wireless station to access network slices that are dedicated for emergency categorized services. The base station may also permit the wireless station to access network slices corresponding to different authorized services. Examples of the emergency categorized services may include a fire station service, a police service, a hospital service, a map, a cab service, or any other appropriate emergency or non-emergency service.

The base station may permit the wireless station to access portions of the network based on a service set identifier (SSID) for emergency services. Upon authorization of the wireless station by the base station, the SSID for emergency services may be visible to the wireless station.

The wireless station (e.g., the UE) may include one or more processors. The wireless station may include the UE. The wireless station may determine a cellular signal is not being received from a cellular network corresponding to the wireless station. The cellular network may include a cellular network corresponding to a service provider of the wireless station. The cellular network may include a first cellular network. The wireless station may determine it is outside a physical area corresponding to the cellular network.

The wireless station may enter an emergency networking mode based on the cellular signal not being received. The wireless station may automatically enter the emergency networking mode based on the cellular signal not being received. The wireless station may determine the wireless station is within a physical area corresponding to the network.

The wireless station may provide a request signal to a base station of a network not corresponding to the wireless station. The network may be different than the cellular network. The request signal may request emergency service access. The network may include a second cellular network. The network may include a WiFi network. The network may include a cellular network corresponding to a service provider not of the wireless station.

The wireless station may receive a setting signal requesting an operational setting of the wireless station. The wireless station may provide a setting response signal indicating the operational setting. The operational setting may indicate the wireless station is in the emergency networking mode and identifies the emergency service to be accessed.

The wireless station may receive an authorization signal in response to the setting response signal. The authorization signal may indicate the wireless station is authenticated to access an emergency service via the network. The authorization signal may also indicate a setting to connect the wireless station with the network.

The wireless station may instruct a data signal to be transmitted within the network in accordance with the setting. The data signal may represent data to be provided to the emergency service. The data signal may represent data provided by a user via a mobile website or an application.

The wireless station may determine the cellular signal is being received from the cellular network. The wireless station may exit the emergency networking mode based on the cellular signal being received.

The base station (e.g., another wireless station) may correspond to a network corresponding to a first service provider. The base station may include one or more processors. The network may include a cellular network corresponding to the first service provider. The network may include a second cellular network. The network may include a WiFi network.

The base station may receive a request signal from the wireless station. The request signal may request emergency service access. The request signal may indicate that the wireless station corresponds to a cellular network corresponding to a second service provider that is different than the first service provider. The cellular network may include a cellular network corresponding to the second service provider. The cellular network may include a first cellular network.

The base station may provide a setting signal in response to the request signal. The setting signal may request an operational setting of the wireless station. The base station may receive a setting response signal indicating the operational setting of the wireless station. The operational setting may indicate the wireless station is in an emergency networking mode and may identify the emergency service to be accessed.

The base station may provide an authorization signal in response to the setting response signal. The authorization signal may indicate the wireless station is authenticated to access an emergency service via the network. The authorization signal may indicate a setting to connect the wireless station with the network. The base station may provide an allowance signal indicating a slice of the network that the wireless station is authorized to access the emergency service via. The allowance signal may indicate a SSID representative of a service set that the wireless station is authorized to access the emergency service via. The base station may make the SSID dedicated to emergency services visible to the wireless station after the wireless station is authorized. The wireless station may connect to the SSID for accessing the emergency services.

The base station may receive a data signal that is transmitted by the wireless station in accordance with the setting. The data signal may represent data to be provided to the emergency service. The data signal may represent data provided by a user via a mobile website or an application.

Example 1a may include a wireless station including one or more processors configured to: determine data is to be transferred; determine a data type of the data corresponds to a priority data type; provide a data type signal indicating the data type corresponds to the priority data type; receive a data type confirmation signal in response to the data type signal; create a dedicated bearer with a network device based on the data type confirmation signal; and instruct the data to be transferred via the dedicated bearer.

Example 2a may include the wireless station of example 1a, wherein the one or more processors are configured to: determine the data is to be transferred by receiving a data transfer request from an application within the wireless station; and identify the data type of the data in response to receiving the data transfer request.

Example 3a may include the wireless station of example 1a, wherein the one or more processors are configured to: determine the data is to be transferred by receiving a data transfer request from an Internet browser within the wireless station; and identify the data type of the data in response to receiving the data transfer request.

Example 4a may include the wireless station of any of examples 1a-3a, wherein the dedicated bearer ensures a bit rate of transferring the data that is equal to or greater than a bit rate of transferring data via a default bearer.

Example 5a may include the wireless station of any of examples 1a-4a, wherein the priority data type includes at least one of a payment data type, a bank data type, a bank transfer data type, and a bank card data type.

Example 6a may include the wireless station of any of examples 1a-5a, wherein the dedicated bearer may be activated to establish an EPS bearer context with a QoS and TFT between the wireless station and the network device

Example 7a may include the wireless station of example 6a, wherein the default bearer is configured to permit transfer of data not corresponding to the priority data type.

Example 8a may include the wireless station of any of examples 1a-7a, wherein the dedicated bearer includes a pre-defined QCI corresponding to the priority data type and a GBR parameter corresponding to the dedicated bearer.

Example 9a may include the wireless station of any of examples 1a and 4a-8a, wherein the one or more processors are configured to: determine the data is to be transferred by receiving a data transfer request; and determine the data type of the data corresponds to the priority data type by determining a source type of the data transfer request corresponds to a priority source.

Example 10a may include the wireless station of any of examples la-9a, wherein the data type signal is provided to the network device via a data type interface outside the dedicated bearer and a default bearer.

Example 11a may include the wireless station of any of examples 1a-10a, wherein a QoS of the data transfer is enforced at an EPS bearer level.

Example 12a may include the wireless station of any of examples 1a-11a, wherein the wireless station is configured to operate within a fourth-generation cellular network.

Example 13a may include a wireless station including one or more processors configured to: determine data is to be transferred; determine a data type of the data corresponds to a priority data type; provide a data type signal indicating the data type corresponds to the priority data type; receive a data type confirmation signal in response to the data type signal; create a QoS flow with a network device based on the data type confirmation signal; and instruct the data to be transferred via the dedicated bearer.

Example 14a may include the wireless station of example 13a, wherein the one or more processors are configured to: determine the data is to be transferred by receiving a data transfer request from an application within the wireless station; and identify the data type of the data in response to receiving the data transfer request.

Example 15a may include the wireless station of example 13a, wherein the one or more processors are configured to: determine the data is to be transferred by receiving a data transfer request from an Internet browser within the wireless station; and identify the data type of the data in response to receiving the data transfer request.

Example 16a the wireless station of any of examples 13a-15a, wherein the QoS flow ensures a bit rate of transferring the data that is equal to or greater than a bit rate of transferring data via a default QoS flow.

Example 17a may include the wireless station of any of examples 13a-16a, wherein the priority data type includes at least one of a payment data type, a bank data type, a bank transfer data type, and a bank card data type.

Example 18a may include the wireless station of any of examples 13a-17a, wherein the QoS flow is implemented in a network slice that is different than a network slice of a default QoS flow.

Example 19a may include the wireless station of example 18a, wherein the default QoS flow is configured to permit transfer of data not corresponding to the priority data type.

Example 20a may include the wireless station of any of examples 13a-19a, wherein the QoS flow includes a pre-defined 5G 5QI corresponding to the priority data type.

Example 21a may include the wireless station of any of examples 13a and 16a-20a, wherein the one or more processors are configured to: determine the data is to be transferred by receiving a data transfer request; and determine the data type of the data corresponds to the priority data type by determining a source type of the data transfer request corresponds to a priority source.

Example 22a may include the wireless station of any of examples 13a-21a, wherein the data type signal is provided to the network device via a data type interface outside the QoS flow and a default QoS flow.

Example 23a may include the wireless station of any of examples 13a-22a, wherein a QoS of the data transfer is enforced at a QoS flow level.

Example 24a may include the wireless station of any of examples 13a-23a, wherein the wireless station is configured to operate within a fifth-generation cellular network.

Example 1b may include a wireless station including one or more processors configured to: determine a cellular signal is not being received from a cellular network corresponding to the wireless station; instruct the wireless station to enter an emergency networking mode based on the cellular signal not being received; provide a request signal to a base station of a network not corresponding to the wireless station, the network being different than the cellular network and the request signal requesting emergency service access; receive a setting signal requesting an operational setting of the wireless station; provide a setting response signal indicating the operational setting; and receive an authorization signal in response to the setting response signal, the authorization signal indicating the wireless station is authenticated to access an emergency service via the network.

Example 2b may include the wireless station of example 1b, wherein the operational setting indicates the wireless station is in the emergency networking mode and identifies the emergency service to be accessed.

Example 3b may include the wireless station of any of examples 1b and 2b, wherein: the authorization signal further indicates a setting to connect the wireless station with the network, and the one or more processors are further configured to instruct a data signal to be transmitted within the network in accordance with the setting.

Example 4b may include the wireless station of example 3b, wherein the data signal represents data to be provided to the emergency service.

Example 5b may include the wireless station of any of examples 1b-4b, wherein the data signal represents data provided by a user via a mobile website or an application.

Example 6b may include the wireless station of any of examples 1b-5b, wherein the one or more processors are further configured to: determine the wireless station is outside a physical area corresponding to the cellular network; and determine the wireless station is within a physical area corresponding to the network.

Example 7b may include the wireless station of any of examples 1b-6b, wherein the one or more processors are configured to automatically instruct the wireless station to enter the emergency networking mode based on the cellular signal not being received.

Example 8b may include the wireless station of any of examples 1b-7b, wherein: the cellular network includes a cellular network corresponding to a service provider of the wireless station; and the network includes a cellular network corresponding to a service provider not of the wireless station.

Example 9b may include the wireless station of any of examples 1b-8b, wherein the one or more processors are further configured to: determine the cellular signal is being received from the cellular network; and instruct the wireless station to exit the emergency networking mode based on the cellular signal being received.

Example 10b may include the wireless station of any of examples 1b-9b, wherein the cellular network includes a first cellular network and the network includes a second cellular network.

Example 11b may include the wireless station of any of examples 1b-9b, wherein the network includes a WiFi network.

Example 12b may include the wireless station of any of examples 1b-11b, wherein the wireless station includes user equipment.

Example 13b may include a wireless station corresponding to a network corresponding to a first service provider, the wireless station including one or more processors configured to: receive a request signal from UE, the request signal requesting emergency service access and indicating that the UE corresponds to a cellular network corresponding to a second service provider that is different than the first service provider; provide a setting signal in response to the request signal, the setting signal requesting an operational setting of the UE; receive a setting response signal indicating the operational setting of the UE; and provide an authorization signal in response to the setting response signal, the authorization signal indicating the UE is authenticated to access an emergency service via the network.

Example 14b may include the wireless station of example 13b, wherein the one or more processors are further configured to provide an allowance signal indicating a slice of the network that the UE is authorized to access the emergency service via.

Example 15b may include the wireless station of example 13b, wherein the one or more processors are further configured to provide an allowance signal indicating a SSID representative of a service set that the UE is authorized to access the emergency service via.

Example 16b may include the wireless station of any of examples 13b-15b, wherein the operational setting indicates the UE is in an emergency networking mode and identifies the emergency service to be accessed.

Example 17b may include the wireless station of any of examples 13b-16b, wherein: the authorization signal further indicates a setting to connect the UE with the network, and the one or more processors are further configured to receive a data signal that is transmitted by the UE in accordance with the setting.

Example 18b may include the wireless station of example 17b, wherein the data signal represents data to be provided to the emergency service.

Example 19b may include the wireless station of any of examples 13b-18b, wherein the data signal represents data provided by a user via a mobile website or an application.

Example 20b may include the wireless station of any of examples 13b-19b, wherein: the cellular network includes a cellular network corresponding to the second service provider; and the network includes a cellular network corresponding to the first service provider.

Example 21b may include the wireless station of any of examples 13b-20b, wherein the cellular network includes a first cellular network and the network includes a second cellular network.

Example 22b may include the wireless station of any of examples 13b-21b, wherein the network includes a WiFi network.

As used in the present disclosure, terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to aspects containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although aspects of the present disclosure have been described in detail, various changes, substitutions, and alterations could be made hereto without departing from the spirit and scope of the present disclosure.

## Claims

1. A wireless station comprising one or more processors configured to:
determine data is to be transferred;
determine a data type of the data corresponds to a priority data type;
provide a data type signal indicating the data type corresponds to the priority data type;
receive a data type confirmation signal in response to the data type signal;
create a dedicated bearer with a network device based on the data type confirmation signal; and
instruct the data to be transferred via the dedicated bearer.

2. The wireless station of claim 1, wherein the one or more processors are configured to:
determine the data is to be transferred by receiving a data transfer request from an application within the wireless station; and
identify the data type of the data in response to receiving the data transfer request.

3. The wireless station of claim 1, wherein the one or more processors are configured to:
determine the data is to be transferred by receiving a data transfer request from an Internet browser within the wireless station; and
identify the data type of the data in response to receiving the data transfer request.

4. The wireless station of any of claims 1-3, wherein the dedicated bearer ensures a bit rate of transferring the data that is equal to or greater than a bit rate of transferring data via a default bearer.

5. The wireless station of any of claims 1-4, wherein the priority data type comprises at least one of a payment data type, a bank data type, a bank transfer data type, and a bank card data type.

6. The wireless station of any of claims 1-5, wherein the dedicated bearer may be activated to establish an evolved packet switched system (EPS) bearer context with a quality of service (QoS) and a traffic flow template (TFT) between the wireless station and the network device.

7. The wireless station of claim 6, wherein the default bearer is configured to permit transfer of data not corresponding to the priority data type.

8. The wireless station of any of claims 1-7, wherein the dedicated bearer comprises a pre-defined quality of service (QoS) class identifier (QCI) corresponding to the priority data type and a guaranteed bit rate (GBR) parameter corresponding to the dedicated bearer.

9. The wireless station of any of claims 1 and 4-8, wherein the one or more processors are configured to:
determine the data is to be transferred by receiving a data transfer request; and
determine the data type of the data corresponds to the priority data type by determining a source type of the data transfer request corresponds to a priority source.

10. The wireless station of any of claims 1-9, wherein the data type signal is provided to the network device via a data type interface outside the dedicated bearer and a default bearer.

11. The wireless station of any of claims 1-10, wherein a QoS of the data transfer is enforced at an EPS bearer level.

12. The wireless station of any of claims 1-11, wherein the wireless station is configured to operate within a fourth-generation cellular network.
